# EUROPÄISCHE PATENTANMELDUNG

(11) **EP 4 254 357 A1**
(43) Veröffentlichungstag der Anmeldung: **04.10.2023**
(21) Anmeldenummer: 23162326.5
(22) Anmeldetag: 16.03.2023
(51) Int. Cl.: G06V 10/82, G06V 20/52, G06V 40/10, G06V 40/20

(54) **COMPUTERIMPLEMENTIERTES VERFAHREN ZUM ERKENNEN EINER DIEBSTAHLSITUATION**

(30) Priorität: 29.03.2022 DE 102022203078
(71) Anmelder: Siemens Mobility GmbH, 81739 München (DE)
(72) Erfinder: Sema, Albi, 10629 Berlin (DE)
(74) Vertreter: Siemens Patent Attorneys

(57) **Zusammenfassung**

Computerimplementiertes Verfahren zum Erkennen einer Diebstahlsituation, bei der eine erste Person eine zweite Person beklaut, wobei zeitlich aufeinander folgende Bilder einer Kamera, die eine Bewegung wenigstens eines Arms der ersten Person darstellen, auf ein Vorliegen der Diebstahlsituation überprüft werden, und wobei, wenn die Bewegung des Arms der ersten Person einer Diebstahlsituation entspricht, ein Signal ausgegeben wird.

## Beschreibung

Die Erfindung betrifft ein computerimplementiertes Verfahren zum Erkennen einer Diebstahlsituation, ein computerimplementiertes Verfahren zum Trainieren eines neuronalen Netzes, einen Computer und ein Computerprogramm.

Das Erkennen von Diebstählen, insbesondere in öffentlichen Verkehrsmitteln ist ein Problem, das noch nicht zufriedenstellend mit technischen Mitteln gelöst ist.

Die Aufgabe der Erfindung besteht darin, ein computerimplementiertes Verfahren zum Erkennen einer Diebstahlsituation bereitzustellen. Weiterhin besteht die Aufgabe der Erfindung darin, ein computerimplementiertes Verfahren zum Trainieren eines neuronalen Netzes bereitzustellen. Zudem besteht die Erfindung darin, einen Computer bereitzustellen, der das vorgeschlagene Verfahren ausführen kann.

Die Aufgaben der Erfindung werden durch die unabhängigen Patentansprüche gelöst.

Weitere Ausführungen sind in den abhängigen Ansprüchen angegeben.

Es wird ein computerimplementiertes Verfahren zum Erkennen einer Diebstahlsituation, bei der eine erste Person eine zweite Person beklaut, vorgeschlagen. Dabei werden zeitlich aufeinander folgende Bilder einer Kamera, die eine Bewegung wenigstens eines Arms der ersten Person darstellen, auf ein Vorliegen der Diebstahlsituation überprüft. Wird das Vorliegen einer Diebstahlsituation aufgrund der Bewegung des Armes der ersten Person erkannt, so wird ein Signal ausgegeben. Das Signal kann optisch, akustisch oder in Form eines elektromagnetischen Signals ausgebildet sein. Das Verfahren kann in einem öffentlichen Raum, d.h. auf einem Platz, in einem Gebäude oder in oder vor einem öffentlichen Verkehrsmittel ausgeführt werden. Eine Diebstahlsituation ist z.B. eine Taschendiebstahlsituation.

In einer Ausführungsform des Verfahrens wird eine Position des Arms der ersten Person mit einer Ortspositionen wenigstens eines vorgegebenen Körperpunktes beschrieben. Dabei werden wenigstens zwei zeitlich aufeinander folgende Ortspositionen des Körperpunktes des Armes überprüft. Durch das Verwenden von Ortspositionen von Körperpunkten für die Festlegung oder Beschreibung einer Position eines Armes werden nur wenige Daten benötigt, um die Position des Armes für die Beurteilung der Diebstahlsituation ausreichend genau zu beschreiben. Auf diese Weise wird Rechenbedarf und Speicherkapazität bei der Durchführung des Verfahrens eingespart. Für die Überprüfung wird eine Sequenz von Bildern der Kamera verwendet, die zeitlich nacheinander aufgenommen wurden. Beispielsweise umfasst eine Sequenz zwischen zwei und 30 Bilder der Kamera. Unter einem Körperpunkt wird ein bestimmter festgelegter Punkt des Körpers, insbesondere ein Punkt im Bereich des Kopfes und/oder eine Punkt im Bereich einer ersten Hand und/oder ein Punkt im Bereich einer zweiten Hand und/oder ein Punkt im Bereich einer ersten Schulter und/oder ein Punkt im Bereich einer zweiten Schulter und/oder ein Punkt im Bereich eines ersten Ellbogengelenkes und/oder ein Punkt im Bereich eines zweiten Ellbogengelenkes und/oder ein Punkt im Bereich eines ersten Handgelenkes und/oder ein Punkt im Bereich eines zweiten Handgelenkes verstanden.

In einer weiteren Ausführung des Verfahrens wird die Bewegung des Armes der ersten Position mithilfe eines Klassifikators, insbesondere mithilfe eines trainierten neuronalen Netzes auf das Vorliegen der Diebstahlsituation überprüft. Versuche haben gezeigt, dass das Erkennen einer bestimmten Bewegung eines Armes einer Person, die auf eine Diebstahlsituation hinweist, sicher und schnell mit einem Klassifikator, insbesondere mit einem trainierten neuronalen Netz erkannt werden kann. Somit wird mithilfe des trainierten neuronalen Netzes ein schnelles und effizientes Verfahren zum Erkennen einer Diebstahlsituation bereitgestellt.

In einer weiteren Ausführungsform werden in einem ersten Schritt mit Hilfe des Klassifikators, insbesondere des trainierten neuronalen Netzes, anhand der Bilder zeitlich aufeinander folgende Ortspositionen von wenigstens einem Körperpunkt des Armes ermittelt. Dabei wird ein Bewegungsablauf des Armes aufgrund der ermittelten Ortspositionen des wenigstens einen Körperpunktes erkannt. In einem zweiten Schritt wird der erkannte Bewegungsablauf des Armes mit Hilfe des Klassifikators auf das Vorliegen einer Diebstahlsituation überprüft. Vorzugsweise wird der erste Schritt von einem entsprechend trainierten ersten neuronalen Netz durchgeführt, wobei der zweite Schritt von einem entsprechend trainierten zweiten neuronalen Netz durchgeführt wird. Durch die Aufteilung in den ersten und den zweiten Schritt können entsprechend optimal trainierte neuronale Netze für die Aufgabe des ersten Schrittes und für die Aufgabe des zweiten Schrittes verwendet werden. Auf diese Weise wird die Erkennung des Bewegungsablaufes des Armes schneller und präziser erreicht. Zudem wird durch die Verwendung des zweiten neuronalen Netzes das Vorliegen einer Diebstahlsituation schneller und präziser ermöglicht. Somit wird insgesamt ein schnelleres und präziseres Verfahren bereitgestellt.

Abhängig von der gewählten Ausführungsform können gleichzeitig auch die Bewegung des zweiten Armes der ersten Person erfasst und auf das Vorliegen einer Diebstahlsituation hin überprüft werden. Dabei wird die Bewegung des zweiten Armes in der gleichen Art und Weise erfasst und bewertet wie die Bewegung des ersten Armes.

In einer weiteren Ausführungsform wird die Bewegung des Armes der ersten Person relativ gegenüber der Position und/oder einem Bewegungsablauf der zweiten Person auf das Vorliegen der Diebstahlsituation hin überprüft. Wird aufgrund der relativen Bewegung des Armes der ersten Person gegenüber der zweiten Person eine Diebstahlsituation erkannt, so wird ein entsprechendes Signal ausgegeben. Durch die Berücksichtigung der zweiten Person bzw. der Bewegung der zweiten Person und damit der relativen Bewegung des Armes der ersten Person gegenüber einer Position der zweiten Person und/oder gegenüber einer Bewegung der zweiten Person kann eine erhöhte Genauigkeit bei dem Erkennen einer Diebstahlsituation erreicht werden. Insbesondere kann das neuronale Netz aufgrund der Berücksichtigung der Position und/oder des Bewegungsablaufes der zweiten Person präziser auf das Erkennen einer Diebstahlsituation trainiert werden.

In einer Ausführung überprüft der Klassifikator die Diebstahlsituation anhand eines Positionsvektors mit einer Ortsposition für wenigstens einen der folgenden Körperpunkte überprüft: Kopfpunkt im Bereich des Kopfes und/oder erster Handmarkierung im Bereich einer ersten Hand und/oder eine zweite Handmarkierung im Bereich einer zweiten Hand und/oder eine erste Schultermarkierung im Bereich einer ersten Schulter und/oder eine zweite Schultermarkierung im Bereich einer zweiten Schulter und/oder eine erste Ellbogengelenkmarkierung im Bereich eines ersten Ellbogengelenkes und eine zweite Ellbogenmarkierung im Bereich eines zweiten Ellbogengelenkes und/oder eine erste Handgelenkmarkierung im Bereich eines ersten Handgelenkes und/oder eine zweite Handgelenkmarkierung im Bereich eines zweiten Handgelenkes. Dadurch wird eine präzise Erfassung der Bewegung des Armes ermöglicht.

In einer weiteren Ausführungsform wird eine zeitliche Sequenz von Bildern, d.h. eine vorgegebene Anzahl von Bildern, der Kamera für das Vorliegen einer Diebstahlsituation überprüft. Versuche haben gezeigt, dass eine Anzahl von Bildern der Kamera ausreicht, die einen Bewegungsablauf der wenigstens ersten Person und vorzugsweise auch der zweiten Person für einen vorgegebenen Zeitraum von wenigstens 2 Sekunden darstellen. Abhängig von der gewählten Ausführungsform kann auch ein Zeitbereich von 1 Sekunde oder ein Zeitbereich von 3 Sekunden, beispielsweise verwendet werden. Durch die Begrenzung der Anzahl der Bilder wird Rechenzeit und Speicherkapazität eingespart, ohne das Ergebnis zu verschlechtern.

In einer Ausführungsform wird die vorgegebene Anzahl von Bildern der Kamera abhängig von einem Öffnen einer Tür eines öffentlichen Gebäudes oder eines öffentlichen Verkehrsmittels und/oder abhängig von einem Schließen der Tür des öffentlichen Verkehrsmittels oder des öffentlichen Gebäudes ausgewählt. Durch die Berücksichtigung des Öffnens einer Tür und/oder des Schließens einer Tür kann die Anzahl der Bilder, die zu überprüfen sind, präzise ausgewählt werden.

Diebstähle werden bevorzugt beim Betreten oder Verlassen eines Gebäudes oder eines öffentlichen Verkehrsmittels ausgeführt. Somit ist es vorteilhaft, wenn die Kamera einen festgelegten Bereich um die Tür, d.h. entweder einen Bereich innerhalb eines öffentlichen Verkehrsmittels oder eines Gebäudes angrenzend an die Tür und/oder einen Bereich außerhalb des öffentlichen Verkehrsmittels und/oder des Gebäudes angrenzend an die Tür überwacht und entsprechende Bilder für diese Bereiche aufnimmt. Der Bereich vor oder nach der Tür kann beispielsweise 2 bis 6 m² umfassen. Durch die Begrenzung des Bereiches wird die Menge der zu verarbeiteten Information, d.h. die Anzahl der Pixel der Bilder reduziert. Auf diese Weise wird Rechenzeit und/oder Speicherkapazität eingespart.

Das Öffnen und/oder das Schließen der Tür kann beispielsweise mithilfe der Kamera überwacht und erkannt werden. Dazu nimmt die Kamera Bilder der Tür auf, wobei anhand der Bilder festgestellt werden kann, ob sich die Tür öffnet oder schließt. Dazu sind entsprechende Vergleichsbilder abgespeichert, die ein Öffnen oder ein Schließen der Tür zeigen. Durch einen Vergleich der aufgenommenen Bilder mit den Vergleichsbildern kann bei einer vorgegebenen Übereinstimmung ein Öffnen und ein Schließen der Tür erkannt werden. Somit kann der Zeitpunkt, zu dem die Bilder ausgewählt werden, anhand eines Bildauswerteverfahrens festgelegt werden. Damit können die Bilder ausgewählt werden, die auf eine Diebstahlsituation hin überprüft werden. Somit kann die Anzahl der zu überprüfenden Bilder genauer festgelegt werden. Damit wird Rechenzeit und Speicherbedarf eingespart.

In einer weiteren Ausführungsform kann zum Festlegen des Zeitpunkts des Öffnens oder des Schließens der Tür ein entsprechendes Steuersignal verwendet werden, das zum Öffnen oder Schließen der Tür verwendet wird. Somit kann auf einfache Weise das Öffnen oder Schließen der Tür erfasst werden. Dieses Verfahren ist insbesondere bei elektrisch gesteuerten Türen von Vorteil. Auch auf diese Weise können die Bilder genauer ausgewählt werden, die auf eine Diebstahlsituation hin überprüft werden. Somit kann die Anzahl der zu überprüfenden Bilder genauer festgelegt werden. Damit wird Rechenzeit und Speicherbedarf eingespart.

In einer weiteren Ausführungsform ist das trainierte neuronale Netz als neuronales Transformer-Netzwerk oder als 3D-gefaltetes neuronales Netzwerk oder als LSTM neuronales Netzwerk ausgebildet. Versuche haben gezeigt, dass sich diese neuronalen Netzwerke für die beschriebenen Aufgaben und insbesondere für das entsprechende Training gut eignen.

Es wird ein computerimplementiertes Verfahren zum Trainieren eines Klassifikators, insbesondere eines neuronalen Netzes, mit zeitlich aufeinander folgenden Trainingsbildern vorgeschlagen. Die Trainingsbilder zeigen jeweils wenigstens einen Arm einer ersten Person, wobei sich aus den Trainingsbildern ein Bewegungsablaufs wenigstens eines Arms der ersten Person ergibt. Das Verfahren dient zum Erkennen einer Diebstahlsituation oder zum Erkennen einer Ortsposition wenigstens eines vorgegebenen Körperpunktes der ersten Person, wobei die Trainingsbilder die erste Person wenigstens teilweise von oben zeigen, wobei die erste Person im Bild wenigstens eines der folgenden Merkmale aufweist: eine Kopfmarkierung im Bereich des Kopfes der ersten Person und/oder eine erste Handmarkierung im Bereich einer ersten Hand und/oder eine zweite Handmarkierung im Bereich einer zweiten Hand und/oder eine erste Schultermarkierung im Bereich einer ersten Schulter und/oder eine zweite Schultermarkierung im Bereich einer zweiten Schulter und/oder eine erste Ellbogengelenkmarkierung im Bereich eines ersten Ellbogengelenkes und eine zweite Ellbogenmarkierung im Bereich eines zweiten Ellbogengelenkes und/oder eine erste Handgelenkmarkierung im Bereich eines ersten Handgelenkes und/oder eine zweite Handgelenkmarkierung im Bereich eines zweiten Handgelenkes. Die Markierungen sind in Form von Punkten auf den Trainingsbildern dargestellt und markieren vorgegebene Körperpunkte.

Die Trainingsbilder stellen eine Sequenz von Bildern für eine Diebstahlsituation dar, bei der die erste Person eine zweite Person beklaut. Die Diebstahlsituation wird beispielsweise von Schauspielern dargestellt und von einer Kamera aufgenommen. Beispielsweise weist eine Sequenz von Trainingsbildern zeitlich nacheinander aufgenommen Trainingsbilder für einen Zeitraum von 1 bis 3 Sekunden auf, wobei beispielsweise alle 100 Millisekunden ein Trainingsbild aufgenommen wird. Zudem sind die Trainingsbilder als Diebstahlsituation gekennzeichnet. Mithilfe dieser Art von Trainingsbildern wird der Klassifikator mit einem überwachten Lernverfahren trainiert, um anhand von Bildern einer Kamera eine Diebstahlsituation zu erkennen. Beim Training wird eine Vielzahl von unterschiedlichen Sequenzen von Trainingsbildern verwendet.

In einer weiteren Ausführungsform weisen die Trainingsbilder die erste Person und eine zweite Person auf, wobei auch die zweite Person wenigstens teilweise von oben dargestellt ist.

Auch die zweite Person kann eine Kopfmarkierung und/oder eine erste Handmarkierung im Bereich einer ersten Hand und/oder eine zweite Handmarkierung im Bereich einer zweiten Hand aufweisen. Die Trainingsbilder eines Bewegungsablaufes, die die erste Person und die zweite Person darstellen, stellen eine Diebstahlsituation dar, bei der die erste Person die zweite Person bestiehlt. Auch mit diesen Trainingsbildern wird das neuronale Netz mit einem überwachten Lernverfahren trainiert, um anhand von Bildern einer Kamera eine Diebstahlsituation zu erkennen. Durch die Darstellung der zweiten Person, die beklaut wird, wird ein genaueres Verfahren erreicht.

In einer weiteren Ausführungsform können die Trainingsbilder für die erste Person und/oder die zweite Person eine erste Schultermarkierung im Bereich einer ersten Schulter und/oder eine zweite Schultermarkierung im Bereich einer zweiten Schulter der ersten oder der zweiten Person aufweisen. Dadurch kann eine präzisere Darstellung des Bewegungsablaufes der ersten Person bzw. des relativen Bewegungsablaufes der ersten Person gegenüber der zweiten Person beim Diebstahl dargestellt werden. Mit diesen Trainingsbildern ist ein präziseres Training zum Erkennen einer Diebstahlsituation gegeben.

In einer weiteren Ausführungsform weisen die Trainingsbilder für die erste Person und/oder die zweite Person eine erste Ellbogengelenkmarkierung im Bereich eines ersten Ellbogengelenks und eine zweite Ellbogengelenkmarkierung im Bereich eines zweiten Ellbogengelenks der ersten und/oder der zweiten Person auf. Auch dadurch wird das Training des neuronalen Netzes zum Erkennen einer Diebstahlsituation verbessert.

In einer weiteren Ausführungsform weisen die Trainingsbilder eine erste Handgelenkmarkierung im Bereich eines ersten Handgelenks und/oder eine zweite Handgelenkmarkierung im Bereich eines zweiten Handgelenks für die erste und/oder die zweite Person auf. Dadurch wird eine weitere Verbesserung des Trainingsverfahrens erreicht.

Für das Training der neuronalen Netze werden verschiedene Sequenzen von Diebstahlsituationen, d.h. jeweils eine festgelegte Anzahl von Bildern einer Diebstahlsituation verwendet. Vorzugsweise wird eine Vielzahl von Sequenzen von Bildern, d.h. beispielsweise 100 bis 500 verschiedene Sequenzen von Trainingsbildern von Diebstahlsituationen verwendet, um den Klassifikator, insbesondere das neuronale Netz, zum Erkennen einer Diebstahlsituation zu trainieren.

In einer Ausführung wird beim Training des Klassifikators, insbesondere des neuronalen Netzes, mit den Trainingsbildern eine Ortsposition wenigstens eines Körperpunktes wenigstens einer Person berücksichtigt, wobei die Ortsposition des Körperpunktes einen x-Wert auf einer x-Achse und einem y-Wert auf einer y-Achse eines kartesischen Koordinatensystems innerhalb des Bildes aufweist, und wobei die Ortsposition des Körperpunktes für ein überwachtes Training des neuronalen Netzes zum Erkennen der Ortsposition des Körperpunktes verwendet wird. Dadurch wird das Training schneller und präziser.

In einer Ausführung wird ein erstes neuronales Netz anhand der Trainingsbilder darauf trainiert wird, Ortspositionen wenigstens eines vorgegebenen Körperpunktes der ersten Person in den Trainingsbildern zu ermitteln. Zudem wird ein zweites neuronales Netz anhand zeitlich aufeinander folgender Ortspositionen des wenigstens einen vorgegebenen Körperpunktes einer Person mit einem überwachten Lernverfahren darauf trainiert, ein Vorliegen einer Diebstahlsituation zu erkennen.

In einer Ausführung werden ein erstes neuronales Netz zum Erkennen eines Bewegungsablaufes des wenigstens einen Armes der ersten Person anhand von Kamerabildern verwendet. Das erste neuronale Netz ist anhand der Trainingsbilder mit einem überwachten Lernen trainiert worden, um den Bewegungsablauf anhand der Körperpunkte der ersten und/oder der zweiten Person zu erkennen.

Zudem wird ein zweites neuronales Netz verwendet, das anhand des vom ersten neuronalen Netz erkannten Bewegungsablaufes des wenigstens ersten Armes der ersten Person eine Diebstahlsituation erkennt. Das zweite neuronale Netz ist anhand von Trainingsbewegungsabläufen für Diebstähle mit einem überwachten Lernverfahren trainiert worden, um anhand von Bewegungsabläufen eine Diebstahlsituation zu erkennen.
FIG 1 eine schematische Darstellung einer Diebstahlsituation mit zwei Personen,
FIG 2 eine schematische Darstellung eines Bildes mit zwei Personen von oben,
FIG 3 eine schematische Darstellung eines Programmablaufs zur Durchführung des computerimplementierten Verfahrens,
FIG 4 eine schematische Darstellung von drei Testbildern einer Diebstahlsituation,
FIG 5 eine schematische Darstellung von weiteren drei Testbildern einer weiteren Diebstahlsituation,
FIG 6 eine schematische Darstellung eines Testbildes von zwei Personen, und
FIG 7 ein erstes und ein zweites neuronales Netz darstellen.

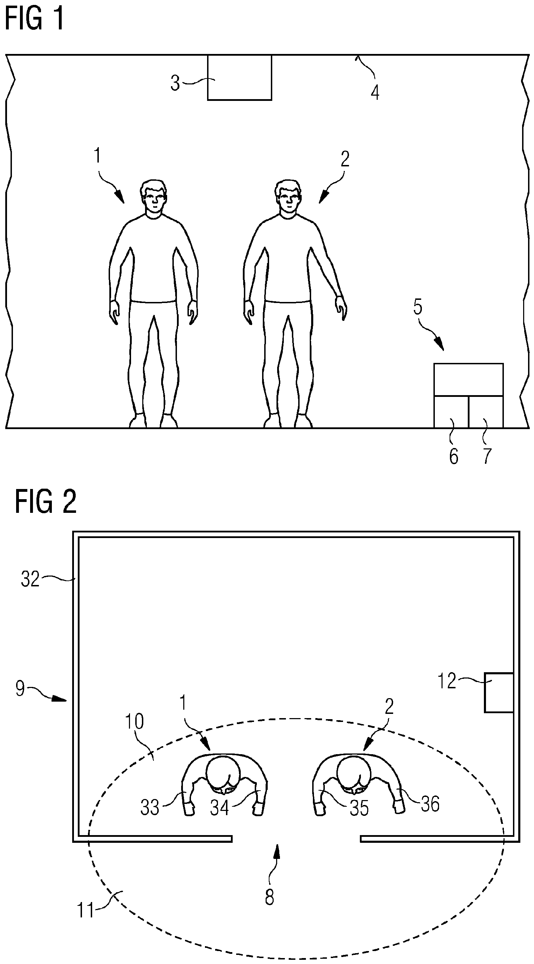

FIG 1 zeigt in einer schematischen Darstellung eine erste und eine zweite Person 1, 2 die sich in einem öffentlichen Verkehrsmittel befinden. Die Personen 1,2 könnten sich auch auf einem öffentlichen Platz, in einem Gebäude oder vor einem Gebäude oder vor einem öffentlichen Verkehrsmittel befinden. In der Umgebung der zwei Personen ist eine Kamera 3 angeordnet, die beispielsweise an einer Decke 4 des öffentlichen Verkehrsmittels angeordnet ist. Die Kamera kann beispielsweise eine CCTV-Kamera sein. Zudem kann die Kamera auch in Form einer Digitalkamera ausgebildet sein.

Das öffentliche Verkehrsmittel kann beispielsweise ein Zug, ein Bus, eine U-Bahn usw. sein. Weiterhin ist ein Computer 5 vorgesehen, der drahtlos oder über eine Datenleitung mit der Kamera 3 in Verbindung steht. Der Computer 5 empfängt digitale Bilder der Kamera 3 und wertet die digitalen Bilder der Kamera 3 in Bezug auf das Vorliegen einer Diebstahlsituation aus. Die Kamera 3 kann über eine Datenleitung, insbesondere ein Ethernet-Kabel oder über eine Funkschnittstelle wie z.B. eine WLAN-Schnittstelle oder eine Mobilfunkverbindung mit dem Computer 5 in Verbindung stehen. Der Computer 5 verfügt über einen Datenspeicher 6 und einen Mikroprozessor 7. Im Datenspeicher 6 sind entsprechende Softwareprogramme abgelegt, mit denen eine festgelegte Anzahl von Bildern von wenigstens einer ersten Person auf das Vorliegen einer Diebstahlsituation überprüft werden können. Zudem dient der Datenspeicher dazu, die von der Kamera 3 empfangenen Bilder zu speichern. Der Mikroprozessor 7 erkennt aufgrund der zeitlichen Abfolge der Bilder der Kamera eine Bewegung wenigstens eines ersten Armes der ersten Person. Dazu können verschiedene Bewegungserkennungsverfahren, insbesondere trainierte neuronale Netzwerke, eingesetzt werden. Die ermittelte Bewegung des ersten Armes der ersten Person wird mit einer im Datenspeicher 7 abgelegten Vergleichsbewegung verglichen. Die Vergleichsbewegung entspricht einer Diebstahlsituation, bei der die erste Person mit dem ersten Arm einen Diebstahl an einer zweiten Person begeht. Zudem kann ein Klassifikator, insbesondere ein trainiertes neuronales Netzwerk, eingesetzt werden, um anhand der Bilder der Kamera eine Diebstahlsituation zu erkennen. Die Begriffe neuronales Netz und neuronales Netzwerk werden synonym verwendet. Unter einem Klassifikator wird eine Hardware und/oder eine Software verstanden, mit der eine Klassifikation von Objekten oder Vorgängen wie z.B. Bewegungen eines Armes einer Person durchgeführt werden kann.

Ergibt der Vergleich mit der Vergleichsbewegung, dass die ermittelte Bewegung des ersten Armes der ersten Person eine Diebstahlsituation darstellt, so gibt der Mikroprozessor 7 ein Signal aus. Das Signal kann in Form eines optischen Signals, beispielsweise in Form einer optischen Anzeige oder eines Leuchtmittels ausgegeben werden. Weiterhin kann das Signal mithilfe eines Lautsprechers akustisch ausgegeben werden. Zudem kann das Signal über eine Mobilfunkschnittstelle oder eine Internetschnittstelle ausgegeben werden.

In einer weiteren Ausführung kann ein trainiertes neuronales Netzwerk eingesetzt werden, um anhand der Bilder der Kamera eine Diebstahlsituation zu erkennen. Wird mithilfe des trainierten neuronalen Netzes eine Diebstahlsituation erkannt, dann wird vom Mikroprozessor 7 ein entsprechendes Signal ausgegeben, wie oben erläutert.

Das ausgegebene elektromagnetische Signal kann von einem Empfangsgerät empfangen werden, wobei das Empfangsgerät das Vorliegen einer Diebstahlsituation optisch und/oder akustisch ausgibt. Das Empfangsgerät kann in Form eines Mobiltelefons oder eines Computers mit einem Bildschirm als optische Ausgabe und/oder mit einem Lautsprecher als akustische Ausgabe ausgebildet sein.

Der Computer 5 kann in der Nähe der Kamera 3 oder auch in einem größeren Abstand zur Kamera 3 angeordnet sein. Beispielsweise kann der Computer 5 in dem öffentlichen Verkehrsmittel angeordnet sein, in dem auch die Kamera 3 angeordnet ist. Zudem kann der Computer 5 in dem Gebäude angeordnet sein, in dem auch die Kamera 3 angeordnet ist.

Weiterhin kann der Computer 5 ausgebildet sein, um von mehreren Kameras entsprechende Bilder zur Auswertung einer Diebstahlsituation zu empfangen. Zusätzlich mit den Bildern der wenigstens einen Kamera kann die Kamera auch eine Kennung an den Computer 5 übermitteln. Dabei verfügt jede Kamera über eine eigene Kennung z.B. in Form von Zahlen. Im Datenspeicher 6 des Computers 5 ist eine Zuordnungsliste zwischen den Kennungen der Kameras und den Ortspositionen der Kameras abgespeichert. Somit kann der Computer 5 aufgrund der Kennung die Ortsposition der Kamera und damit den Ort des Diebstahls identifizieren. Bei dieser Ausführungsform kann der Ort des Diebstahls mit dem Signal ausgegeben bzw. übermittelt werden. Somit kann die zweite Person, die beklaut wurde, über den Diebstahl informiert werden. Weiterhin können beispielsweise Überwachungsdienste über den Diebstahl und den Ort des Diebstahls informiert werden. Zudem kann abhängig von der gewählten Ausführungsform der Computer mit dem Signal ein Bild der ersten Person, die den Diebstahl ausgeführt hat, übermitteln bzw. über die Anzeige ausgeben. Weiterhin kann der Computer 5 ein Bild der beklauten zweiten Person mit dem Signal ausgeben bzw. mit dem Signal übermitteln. Somit kann eine schnelle Identifizierung des Diebes und des Bestohlenen erfolgen.

Vorzugsweise gibt der Computer das Signal an Empfangsgeräte weiter, die im Bereich des Ortes der Kamera, die die Bilder des Diebstahls erfasst hat, angeordnet sind. Somit kann auch Wachpersonal, das entsprechende mobile Empfangsgeräte besitzt und sich im Bereich der Kamera aufhält, schnell und präzise über das Vorliegen einer Diebstahlsituation informiert werden.

Vorzugsweise erfasst der Computer 5 eine Position eines Armes der ersten Person aufgrund von zwei festgelegten Körperpunkten. Mithilfe der festgelegten Körperpunkte kann mit wenig Informationen die Position des Armes der ersten Person bzw. eine Veränderung der Position des Armes der ersten Person erfasst und verfolgt werden. Die Körperpunkte der ersten Person können beispielsweise folgende Körperpunkte beinhalten: Kopf, erste Hand, zweite Hand, erste Schulter, zweite Schulter, erstes Ellbogengelenk, zweites Ellbogengelenk, erstes Handgelenk am ersten Arm und/oder zweites Handgelenk am zweiten Arm. Die entsprechenden Körperpunkte werden mit entsprechend gemessenen wirklichen Positionen der entsprechenden Körperpunkte erfasst und mit Vergleichspositionen bzw. mit Vergleichsbewegungen der entsprechenden Körperpunkte verglichen. Die Vergleichsbewegungen stellen Bewegung dar, die bei einem Diebstahl auftreten.

In einer weiteren Ausführungsform weist der Computer 5 ein trainiertes neuronales Netz auf, die aufgrund der zeitlich aufeinanderfolgenden Bilder der Kamera eine Diebstahlsituation erkennen können. Das neuronale Netz ist in entsprechender Weise mit entsprechenden Trainingsbildern zuvor trainiert worden. Das neuronale Netz kann beispielsweise als neuronales Transformer-Netzwerk oder als 3D-gefaltetes neuronales Netzwerk oder als LSTM (Long Short Term Memory) neuronales Netzwerk ausgebildet sein.

FIG 2 zeigt in einer schematischen Darstellung zwei Personen 1, 2 von oben, wobei die zwei Personen in einem Wagen 32 eines öffentlichen Verkehrsmittels 9, insbesondere eines Zuges, vor einer geöffneten Tür 8 des öffentlichen Verkehrsmittels 9 stehen. Die Kamera 3 ist in der dargestellten Situation nicht dargestellt, befindet sich jedoch oberhalb der ersten und der zweiten Person 1,2. Anhand dieser Darstellung ist erkennbar, dass die Anordnung der Kamera oberhalb der Personen 1, 2 den Vorteil bietet, dass die Positionen der Arme 33, 34, 35, 36 der Personen 1,2 gut mit einem Bild der Kamera aufgenommen werden können. Dies ist insbesondere deshalb von Vorteil, da die Position der Arme 33, 34, 35, 36 neben einem Abstand zwischen der ersten und der zweiten Person 1,2 einen verlässlichen Hinweis auf das Vorliegen einer Diebstahlsituation geben können.

Weiterhin haben Untersuchungen gezeigt, dass die meisten Diebstähle sich im Bereich von Türen 8, beispielsweise von Gebäuden oder öffentlichen Verkehrsmitteln, ereignen. Insofern ist es vorteilhaft, einen Bereich 11, 10 vor oder nach der Tür mithilfe einer Kamera zu überwachen bzw. den Bereich 11 vor und den Bereich 10 nach der Tür 8 auf dem Bild für die Erfassung einer Diebstahlsituation auszuwerten. Auf diese Weise ist es nicht erforderlich, dass ein Bild eines gesamten Innenraumes beispielsweise eines Gebäudes oder eines öffentlichen Verkehrsmittels überwacht werden muss. Der erste Bereich 10 innerhalb des öffentlichen Verkehrsmittels 9 und der zweite Bereich 11 außerhalb des öffentlichen Verkehrsmittels 9 ist schematisch in Form von gestrichelten Linien dargestellt. Der erste und der zweite Bereich 10, 11 grenzen jeweils an die Türöffnung an. Nimmt beispielsweise die Kamera ein Bild vom gesamten Innenraum des öffentlichen Verkehrsmittels auf, so ist es für die Überwachung einer Diebstahlsituation ausreichend, wenn nur der erste Bereich 10 angrenzend an die Tür 8 im Bild ausgewertet wird. In analoger Weise ist es nicht erforderlich, dass der gesamte Außenbereich vor der Tür 8 im Bild ausgewertet wird, um eine Diebstahlsituation zu erkennen. Auch für den Bereich außerhalb des öffentlichen Verkehrsmittels 9 ist es ausreichend, wenn nur der zweite Bereich 11 überwacht und/oder im Bild ausgewertet wird. Der erste und der zweite Bereich 10, 11 können beispielsweise eine Fläche im Bereich von 1 bis 10 m² aufweisen. Der erste und der zweite Bereich 10, 11 sind beispielsweise rechteckförmig, halbkreisförmig oder quadratisch ausgebildet. Vorzugsweise sind der erste und/oder der zweite Bereich halbkreisförmig. Mit der Halbkreisform wird mit wenig Fläche ein gutes Ergebnis bei der Überwachung von Diebstählen erreicht. Im öffentlichen Verkehrsmittel 9, insbesondere im Wagen 32, ist eine Steuervorrichtung 12 vorgesehen, die ein Steuersignal an einen Aktor zum Öffnen oder Schließen der Tür 8 ausgibt. Der Aktor ist beispielsweise ein Elektromotor, der die Tür mechanisch öffnet oder schließt.

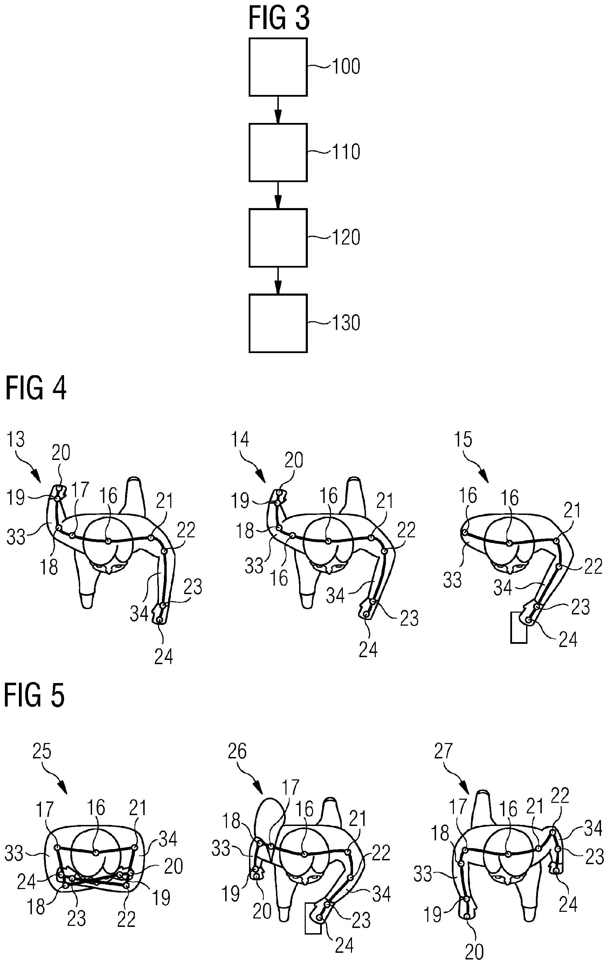

FIG 3 zeigt einen schematischen Programmablauf zur Durchführung des Verfahrens. Bei Programmpunkt 100 erfasst die Kamera zeitlich aufeinander folgende Bilder von wenigstens einer Person, insbesondere von zwei Personen, von oben. Diese Bilder werden in Form einer Bilderfolge an den Computer bei Programmpunkt 110 übermittelt und im Datenspeicher abgelegt. Bei dem folgenden Programmpunkt 120 vergleicht der Mikroprozessor die in der Bilderfolge dargestellten Bewegungsabläufe der ersten Person und insbesondere der Bewegung des wenigstens eines ersten Arms oder der zwei Arme der ersten Person. In einer Ausführung erfasst der Mikroprozessor dabei nur Ortspositionen von vorgegebenen Körperpunkten in den Bildern, um die Bewegungsabläufe der Person und insbesondere des wenigsten eines Armes oder der zwei Arme der ersten Person zu erfassen. Die Körperpunkte sind z.B. Kopf, rechte Schulter, linke Schulter, rechtes Ellbogengelenk, linkes Ellbogengelenk, rechtes Handgelenk, linkes Handgelenk, rechte Hand und/oder linke Hand. Zur Erfassung der Bewegung des wenigstens einen Arms der ersten Person werden mehrere Bilder der Kamera ausgewertet. Die Ortsposition eines Körperpunktes besteht in einer x-Wert auf einer x-Achse und einem y-Wert auf einer y-Achse eines kartesischen Koordinatensystems innerhalb des Bildes. Dabei wird davon ausgegangen, dass die Bilder alle die gleiche Größe aufweisen. Ein Positionsvektor mit den Ortspositionen für eine Person kann z.B. folgende Form aufweisen: {x1, y1; x2,y2;...;x9,y9}, wobei mit x1 der x-Wert und der y1 der y-Wert im kartesischen Koordinatensystem des Bildes für den ersten Körperpunkt, z.B. für die Hand, bezeichnet ist. In entsprechender Weise stellen die weiteren Werte die x- und y-Werte der weiteren Körperpunkte dar. Beispielsweise wird für jede Person im Bild ein entsprechender Positionsvektor für die Körperpunkte der Person ermittelt.

Für die Auswertung der Bewegung können entsprechende Bewegungsabläufe von Armen und/oder von Bewegungsabläufen von Ortspositionen der vorgegebenen Körperpunkte und/oder von Bewegungen der ersten Person im Datenspeicher 6 abgelegt sein. Beispielsweise können entsprechende Vergleichspositionsvektoren abgespeichert sein, die eine Bewegung der Person bei einem Diebstahl darstellen.

Zudem kann der Mikroprozessor 7 ausgebildet sein, um ein trainiertes neuronales Netz darzustellen. Das trainierte neuronale Netz ist in der Weise ausgebildet und trainiert worden, dass anhand der Bewegung eines Armes oder der Bewegung von zwei Armen der ersten Person das Vorliegen einer Diebstahlsituation erkannt wird. Das trainierte neuronale Netz kann auch in der Weise ausgebildet und trainiert worden, dass anhand der Bewegung der Ortspunkte festgelegter Körperpositionen der ersten Person das Vorliegen einer Diebstahlsituation erkannt wird.

Dazu kann das neuronale Netz anhand von Ortsposition von Körperpunkten einer Person, einer x-Werte auf einer x-Achse und y-Werte auf einer y-Achse eines kartesischen Koordinatensystems innerhalb des Bildes darstellen, trainiert worden sein, um eine Diebstahlsituation zu erkennen. Dabei können die beschriebenen Positionsvektoren mit den Ortspositionen für Körperpunkte einer Person zum Trainieren verwendet werden. Das Training erfolgt mithilfe eines überwachten Trainings, wobei insbesondere in den Trainingsbildern die Körperpunkte optisch in Form von Punkten dargestellt sind, und wobei für jeden Körperunkt der entsprechende x-Wert und der y-Wert bekannt sind. Diese Information wird für das Training verwendet, um das neuronale Netz mit einem überwachten Lernen zu trainieren. Somit sind für die im Trainingsbild dargestellten Personen entsprechende Positionsvektoren bekannt, die z.B. folgende Form aufweisen: {x1, y1; x2,y2;...;x9,y9}, wobei mit x1 der x-Wert und der y1 der y-Wert im kartesischen Koordinatensystem des Bildes für den ersten Körperpunkt, z.B. für die Hand, bezeichnet ist. In entsprechender Weise stellen die weiteren Werte die x- und y-Werte der weiteren Körperpunkte dar. Diese Positionsvektoren werden für das Training des neuronalen Netzes verwendet.

Zudem wird das neuronale Netz darauf trainiert, anhand der erkannten und zeitlich aufeinander folgenden Positionsvektoren der zeitlich aufeinander folgenden Trainingsbilder eine Diebstahlposition zu erkennen.

Beispielsweise kann das trainierte neuronale Netz in Form eines trainierten neuronalen Transformer-Netzwerkes oder in Form eines dreidimensionalen gefalteten neuronalen Netzwerkes oder in Form eines LSTM neuronalen Netzwerkes ausgebildet sein. Ein Transformernetzwerk ist beispielsweise in dem Artikel von Ze Liu et al., Video Swin Transformer, arXiv:2106.13230v1, 24. Juni 2021 beschrieben. Weiterhin ist ein dreidimensionales gefaltetes neuronales Netzwerk dem Fachmann aus Kensho Hara et al., Learning Spatio-Temporal Features with 3D Residual Networks for Action Recognition, arXiv:2708.07632v1, 25. August 2017, bekannt.

Abhängig von der gewählten Ausführungsform kann die Überprüfung der Diebstahlsituation auch in zwei Schritten im Programmpunkt 120 unterteilt werden. In einem ersten Schritt wird beispielsweise mithilfe des trainierten neuronalen Netzes anhand der Reihenfolge der Bilder und anhand der aufeinanderfolgenden Positionen des wenigstens einen Armes der Person ein Bewegungsablauf des oder der Arme und eine Bewegung der ersten Person erfasst. Für die Beschreibung der Bewegung des Armes kann ein entsprechender Positionsvektor verwendet werden. Für den ersten Schritt wird vorzugsweise ein erstes trainiertes neuronalen Netz eingesetzt, das auf die Erkennung eines Bewegungsablaufs eines Diebstahls, d.h. einer Bewegung einer ersten Person und einer Bewegung des oder der Arme der ersten Person, insbesondere anhand von Positionsvektoren der Person trainiert worden ist. Beispielsweise kann das trainierte erste neuronale Netzwerk für jede Person jeden Bildes einen Positionsvektor ausgeben. Für eine festgelegte Anzahl von zeitlich aufeinander folgenden Bildern der Kamera gibt das trainierte erste neuronale Netz vorzugsweise für jede Person eine zeitliche Reihenfolge von Positionsvektoren von vorgegebenen Körperpunkten der Person aus.

Dabei kann ein Positionsvektor der ersten Person zu einem festgelegten Zeitpunkt wenigstens eine Ortspositionen (x-Wert, y-Wert) für wenigstens einen der folgenden Körperpunkte aufweisen: eine Ortsposition für den Kopf, eine Ortsposition für die erste Hand, eine Ortsposition für die zweite Hand, eine Ortsposition für die erste Schulter, eine Ortsposition für die zweite Schulter, eine Ortsposition für ein erstes Ellbogengelenk, eine Ortsposition für ein zweites Ellbogengelenk, eine Ortsposition für ein erstes Handgelenk und eine Ortsposition für ein zweites Handgelenk des ersten bzw. des zweiten Armes aufweisen.

In einer weiteren Ausführung kann das erste neuronale Netzwerk eine zeitliche Reihenfolge von Positionsvektoren von vorgegebenen Körperpunkten der ersten und der zweiten Person ausgeben. Der Positionsvektor der zweiten Person kann Ortspositionen für wenigstens einen der folgenden Körperpunkte der zweite Person aufweisen: eine Ortsposition für den Kopf, eine Ortsposition für die erste Hand, eine Ortsposition für die zweite Hand, eine Ortsposition für die erste Schulter, eine Ortsposition für die zweite Schulter, eine Ortsposition für ein erstes Ellbogengelenk, eine Ortsposition für ein zweites Ellbogengelenk, eine Ortsposition für ein erstes Handgelenk und eine Ortsposition für ein zweites Handgelenk des ersten bzw. des zweiten Armes aufweisen.

Abhängig von der gewählten Ausführungsform kann der Positionsvektor auch Ortspositionen, d.h. x-, y-Werte, von anderen Körperpunkten der ersten und/oder der zweiten Person bzw. des oder der Arme der ersten und/oder der zweiten Person aufweisen. Abhängig von der gewählten Ausführungsform kann das trainierte erste neuronale Netz eine zeitliche Abfolge von Positionsvektoren der ersten und der zweiten Person ausgeben. Das erste neuronale Netz kann beispielsweise als Mask R-CNN ausgebildet sein, das beispielsweise in "Mask R-CNN" von Kaiming He et al., arXiv:1703.06870v3, 24 Jan 2018, beschrieben ist.

Zudem ist ein zweites trainiertes neuronales Netzwerk vorgesehen, das in der Weise trainiert ist, um anhand der vom ersten Netzwerk ermittelten zeitlich nacheinander folgenden Positionsvektoren einer Person eine Diebstahlsituation zu erkennen. Beispielsweise werden 10 bis 30 zeitlich aufeinander folgende Bilder bzw. 10 bis 30 zeitlich aufeinander folgende Positionsvektoren einer Person mithilfe des zweiten neuronalen Netzes auf das Vorliegen einer Diebstahlsituation überprüft. Das zweite trainierte neuronale Netz kann als LSTM rekurrentes neuronales Netzwerk ausgebildet sein.

In einer weiteren Ausführungsform wird die Auswahl, der von der Kamera übermittelten Bilder für die Überprüfung einer Diebstahlsituation abhängig von der Situation festgelegt, ob sich eine Tür öffnet oder eine Tür schließt. Das Öffnen oder das Schließen der Tür kann vom Mikroprozessor anhand der von der Kamera übermittelten Bilder durch einen Bildvergleich mit Referenzbildern erkannt werden. Bei dem Bildvergleich werden die Bilder der Kamera mit einem oder mehreren Referenzbildern verglichen, die eine geöffnete oder eine wenigstens teilweise geöffnete Tür darstellen. Der Bildvergleich kann pixelweise erfolgen oder mithilfe eines trainierten neuronalen Netzes durchgeführt werden. Zudem kann der Computer mit der Steuervorrichtung in Verbindung stehen. Die Steuervorrichtung ist ausgebildet, um ein Steuersignal zum Öffnen oder zum Schließen der Tür an einen entsprechenden Aktor der Tür abzugeben. Dieses Steuersignal wird in dieser Ausführungsform gleichzeitig an den Computer übermittelt. Der Computer kann nun bei Erkennen des Öffnens der Tür eine festgelegte Anzahl von Bildern insbesondere für einen festgelegten Zeitraum vor dem Öffnen der Tür und für einen festgelegten Zeitraum nach dem Öffnen der Tür als Bilderfolge zur Überprüfung einer Diebstahlsituation auswählen. In analoger Weise kann auch das Schließen der Tür zum Festlegen der zu überprüfenden Bilder verwendet werden. Auf diese Weise ist es nicht erforderlich, dass laufend die Bilder der Kamera auf das Vorliegen einer Diebstahlsituation überprüft werden müssen. Somit kann Rechenzeit und Speicherkapazität eingespart werden.

Wird bei Programmpunkt 120 eine Diebstahlsituation erkannt, so gibt der Computer bei Programmpunkt 130 ein Signal aus.

Bei der Überprüfung, ob eine Diebstahlsituation vorliegt, kann zusätzlich zu dem Bewegungsablauf der ersten Person auch ein Bewegungsablauf der zweiten Person, d.h. Positionsvektoren der zweiten Person, ausgewertet werden. Dabei kann der relative Abstand zwischen der ersten Person und der zweiten Person und die relative Bewegung des oder der Arme der ersten Person in Bezug auf die zweite Person erfasst und ausgewertet werden.

In analoger Weise ist bei dieser Ausführungsform das erste neuronale Netzwerk ausgebildet, um einen Bewegungsablauf der ersten Person und der zweiten Person anhand von Positionsvektoren von vorgegebenen Körperpunkten der ersten und der zweiten Person zu ermitteln. Der Positionsvektor der zweiten Person kann Ortspositionen (x-, y-Werte) von mehr oder weniger vorgegebenen Körperpunkten als der Positionsvektor der ersten Person aufweisen. Insbesondere kann der Positionsvektor der zweiten Person nur eine Ortsposition für den Kopf der zweiten Person und/oder eine Ortsposition für die linke Schulter und/oder eine Ortsposition für die rechte Schulter aufweisen. In der Regel reicht die Ausrichtung des Körpers der zweiten Person für die Überprüfung einer Diebstahlbewegung durch die erste Person. Durch die Reduzierung des Positionsvektors der zweiten Person kann Speicherkapazität und Rechenzeit eingespart werden.

FIG 4 zeigt in einer schematischen Darstellung eine Sequenz von drei zeitlich aufeinanderfolgenden Trainingsbildern 13, 14, 15 eines Bewegungsablaufes einer ersten Person 1, bei dem die erste Person 1 eine zweite Person bestiehlt. Bei dem Bewegungsablauf sind auch die Bewegungen des ersten Armes 33 und des zweiten Armes 34 der ersten Person 1 dargestellt. Die Trainingsbilder zeigen die erste Person von oben, wobei auf der ersten Person 1 vorgegebene Körperpunkte in Form von Körperpunkten dargestellt sind.

Ein erster Körperpunkt 16 ist als Kopfmarkierung im Bereich des Kopfes dargestellt. Vorzugsweise ist der erste Körperpunkt 16 mittig im Kopf angeordnet. Ein zweiter Körperpunkt 17 ist im Bereich einer ersten Schulter, vorzugsweise über dem Schultergelenk dargestellt. Ein dritter Körperpunkt 18 ist im Bereich über einem Ellbogengelenk des ersten Armes als Ellbogengelenkmarkierung dargestellt. Ein vierter Körperpunkt 19 ist im Bereich über einem ersten Handgelenk des ersten Armes 33 dargestellt. Ein fünfter Körperpunkt 20 ist über einer ersten Hand des ersten Armes eingezeichnet. In analoger Weise sind weitere erste, zweite, dritte, vierte und fünfte Körperpunkte 21, 22, 23, 24, 25 über den entsprechenden Bereichen der Schulter, des Ellbogengelenks, des Handgelenks und der Hand des zweiten Armes 34 dargestellt. Die Körperpunkte sind beispielsweise nachträglich in aufgenommene Bilder eingetragen worden, um die Positionen der entsprechenden Körperteile für das Trainieren der neuronalen Netze präziser erkennbar zu machen. Zudem sind für die Körperpunkte der ersten Person der x-Wert auf der x-Achse und der y-Wert auf der y-Achse eines kartesischen Koordinatensystems im ersten Trainingsbild bekannt und werden für das überwachte Trainieren des ersten neuronalen Netzes verwendet.

Das zweite Trainingsbild 14 zeigt die erste Person 1 in einer zweiten Bewegungssituation. Das dritte Trainingsbild 15 zeigt die erste Person 1 in einer dritten Position, bei der die erste Person den Diebstahl begeht, z.B. eine Geldbörse aus einer Tasche einer zweiten Person entnimmt. Auch in dieser Position sind die Körperpunkte 16 bis 24, soweit aufgrund der Haltung der ersten Person 1 sichtbar, eingezeichnet. Zudem sind für die Körperpunkte der ersten Person der x-Wert auf der x-Achse und der y-Wert auf der y-Achse eines kartesischen Koordinatensystems im zweiten und im dritten Trainingsbild bekannt und werden für das überwachte Trainieren des ersten neuronalen Netzes verwendet.

FIG 5 zeigt eine weitere Sequenz von drei Trainingsbildern von der ersten Person 1 für eine Diebstahlsituation mit einem vierten, fünften und einem sechsten Trainingsbild 25, 26, 27. Auch bei diesen Trainingsbildern sind die Körperpunkte 16 bis 24entsprechend wie in FIG 4 eingezeichnet. In dieser Situation tritt der Diebstahl beim fünften Trainingsbild 26 auf. Zudem sind für die Körperpunkte der ersten Person der x-Wert auf der x-Achse und der y-Wert auf der y-Achse eines kartesischen Koordinatensystems in den Trainingsbildern bekannt und werden für das überwachte Trainieren des ersten neuronalen Netzes verwendet.

Die in den FIG 4 und 5 dargestellten zeitlich nacheinander folgenden Trainingsbildern für die jeweilige Diebstahlsequenz sind nur beispielhaft. In der Praxis kann eine Trainingssequenz von Trainingsbildern, die von dem neuronalen Netz für das Erkennen eines Diebstahls überprüft werden, beispielsweise zwischen 10 und 30 Bilder aufweisen.

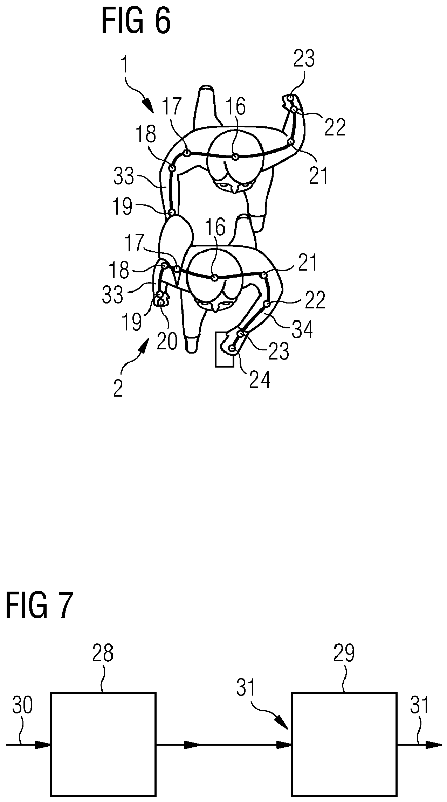

In einer weiteren Ausführungsform weisen die Sequenzen der Trainingsbilder für einen Diebstahl nicht nur die Darstellung der ersten Person, den Dieb, sondern auch die Darstellung der zweiten Person auf, wobei die zweite Person von der ersten Person bestohlen wird. Die zweite Person ist in analoger Weise zur ersten Person auch mit entsprechenden Körperpunkten gekennzeichnet. Durch die Verwendung der Körperpunkte und der Information, über die x- und y-Werte der Körperpunkte können die neuronalen Netze besser und sicherer trainiert werden, um eine Diebstahlsituation zu erfassen. FIG 6 zeigt schematisch ein Trainingsbild, bei der die erste und die zweite Person 1,2 schematisch von oben dargestellt sind. Auf der ersten und der zweiten Person sind jeweils die Körperpunkte 16 bis 24 eingezeichnet. Die Verwendung dieser Art von Trainingsbilder weist den Vorteil auf, dass die neuronalen Netze schneller und besser trainiert werden können, um eine Diebstahlsituation zu erkennen.

FIG 7 zeigt in einer schematischen Darstellung ein erstes neuronales Netzwerk 28 und ein zweites neuronales Netzwerk 29. Beim Trainieren des ersten neuronalen Netzwerkes 28 werden auf einer Eingangsseite 30 dem ersten neuronalen Netzwerk 28 der Reihe von beispielsweise 30 zeitlich aufeinander folgende Trainingsbilder zugeführt, die eine Diebstahlsituation darstellen, wie beispielsweise in den FIG 4 bis 6 dargestellt. Gleichzeitig sind die Personen der Trainingsbilder mit den Körperpunkten der FIG 4 bis 6 dargestellt, kennzeichnet und der Positionsvektor mit den x-Werten und den y-Werten der Körperpunkte sind bekannt. Das erste neuronale Netzwerk 28 wird in der Weise trainiert, dass das erste neuronale Netzwerk 28 anhand eines Bildes einen Positionsvektor mit x-, y-Werten für die vorgegebenen Körperpunkte der Person im Bild ermittelt. Dabei wird beispielsweise in der zweidimensionalen Darstellung des Bildes für vorgegebene Körperpunkte einer ersten und/zweiten Person im Trainingsbild jeweils ein x-Wert und ein y-Wert ermittelt. Dieser Positionsvektoren werden vom ersten neuronalen Netzwerk ausgegeben. Das erste neuronale Netz wird so trainiert, dass der ermittelte Positionsvektor dem bekannten Positionsvektor der Person entspricht.

Das zweite neuronale Netzwerk 29 wurde anhand von Positionsvektoren mit x-, und y-Werten für vorgegebene Körperpunkte, die einer Diebstahlsituation entsprechen, dahingehend trainiert, die Diebstahlsituation zu erkennen. Das zweite trainierte neuronale Netzwerk 29 gibt auf einer Ausgangsseite die Information aus, dass eine Diebstahlsituation vorliegt oder nicht, und vorzugsweise wie groß die Wahrscheinlichkeit für die Diebstahlsituation ist.

Nach dem Training wird im Betrieb eine vorgegebene Anzahl von zeitlich nacheinander aufgenommenen Bildern der Kamera nacheinander einem Eingang 30 des trainierten ersten neuronalen Netzwerkes 28 zugeführt. Das erste neuronale Netzwerk 28 ermittelt für jedes Bild für dargestellte Personen Positionsvektoren mit x-, y-Werten für vorgegebene Körperpunkte. Somit wird eine Anzahl von zeitlich aufeinander folgenden Positionsvektoren für wenigstens eine Person vom ersten neuronalen Netzwerk ermittelt und ausgegeben.

Die ermittelten Positionsvektoren mit x-, y-Werten für die Körperpunkte der Person werden in der gleichen zeitlichen Reihenfolge einem Eingang 31 des trainierten zweiten neuronalen Netzwerkes 29 zugeführt. Das zweite neuronale Netzwerk 29 überprüft anhand der Abfolge der Positionsvektoren der vorgegebenen Körperpunkte der ersten und/oder der zweiten Person eine Diebstahlsituation. Erkennt das zweite neuronale Netzwerk 29 eine Diebstahlsituation, so wird diese Information über einen Ausgang 37 an den Mikroprozessor gegeben. Erhält der Mikroprozessor die Information, dass ein Diebstahl erkannt wurde, dann gibt der Mikroprozessor das Signal aus, wie bereits erläutert.

Das erste und/oder das zweite neuronale Netzwerk sind in Form von Softwareprogrammen und/oder in Form von Hardwareschaltungen realisiert.

Wie hierin verwendet, entspricht ein Computer z.B. einem Prozessor oder einem beliebigen elektronischen Gerät, das über Hardwareschaltungen, Software und/oder Firmware zur Verarbeitung von Daten konfiguriert ist. Beispielsweise können die hier beschriebenen Prozessoren einem oder mehreren (oder einer Kombination) eines Mikroprozessors, einer CPU oder einer anderen integrierten Schaltung (IC) oder einer anderen Art von Schaltung entsprechen, die in der Lage ist, Daten in einem Datenverarbeitungssystem zu verarbeiten. Es sollte verstanden werden, dass ein Prozessor, der so beschrieben oder beansprucht wird, dass er zur Ausführung eines bestimmten beschriebenen/beanspruchten Prozesses oder einer Funktion konfiguriert ist, einer CPU entsprechen kann, die Computer-/Prozessor-ausführbare Anweisungen ausführt, die in einem Speicher in Form von Software und/oder Firmware gespeichert sind, um einen solchen beschriebenen/ beanspruchten Prozess oder eine solche Funktion auszuführen; und/oder einem IC entsprechen kann, der mit einer Verarbeitungsschaltung fest verdrahtet ist (z. B. ein FPGA oder ASIC IC), um einen solchen beschriebenen/beanspruchten Prozess oder eine solche Funktion auszuführen. Es sollte auch verstanden werden, dass ein Computer, der so beschrieben oder beansprucht wird, dass er so konfiguriert ist, dass er einen bestimmten beschriebenen/beanspruchten Prozess oder eine Funktion ausführt, der Kombination des Computers mit Softwareanweisungen entsprechen kann, die in den beschriebenen Speicher (flüchtig und/oder nichtflüchtig) geladen/installiert sind, die gerade ausgeführt werden und/oder zur Ausführung durch den Computer zur Verfügung stehen, um den Computer zu veranlassen, den beschriebenen/beanspruchten Prozess oder die Funktion auszuführen. So kann ein Prozessor, der ausgeschaltet ist oder andere Software ausführt, aber die beschriebenen Softwareanweisungen auf einem Speichergerät in operativer Verbindung damit (wie einer Festplatte oder SSD) in einer Weise installiert hat, die so eingerichtet ist, dass sie vom Computer ausgeführt wird (wenn er von einem Benutzer, einer Hardware und/oder anderer Software gestartet wird), auch dem beschriebenen/beanspruchten Computer entsprechen, der so konfiguriert ist, dass er die hierin beschriebenen/ beanspruchten besonderen Prozesse und Funktionen ausführt. Der Speicher des Computers kann einem internen oder externen flüchtigen Speicher (z.B. Hauptspeicher, CPU-Cache und/oder RAM) entsprechen, der in dem Computer enthalten ist und/oder in operativer Verbindung mit dem Computer steht. Ein solcher Speicher kann auch einem nichtflüchtigen Speicher entsprechen (z.B. Flash-Speicher, SSD, Festplatte oder ein anderes Speichergerät oder nichttransitorisches computerlesbares Medium), der in operativer Verbindung mit dem Computer steht. Der beschriebene Computer kann mindestens ein Eingabegerät und mindestens ein Anzeige- oder Ausgabegerät in operativer Verbindung mit dem Computer umfassen. Die Eingabevorrichtung kann beispielsweise eine Maus, eine Tastatur, einen Touchscreen, eine Gesteneingabevorrichtung oder eine andere Art von Eingabevorrichtung umfassen, die in der Lage ist, Benutzereingaben für den Computer bereitzustellen. Die Anzeigevorrichtung kann beispielsweise einen LCD- oder AMOLED-Bildschirm, einen Monitor, ein am Kopf getragenes Display oder jede andere Art von Anzeigevorrichtung oder Ausgabevorrichtung umfassen, die in der Lage ist, Ausgaben des Computers anzuzeigen. Beispielsweise können der Computer, der Speicher, die Softwareanweisungen, die Eingabevorrichtung und die Anzeigevorrichtung als Teil eines Datenverarbeitungssystems enthalten sein, das einem PC, einer Workstation, einem Server, einem Notebook, einem Tablet, einem Mobiltelefon, einer kopfgetragenen Anzeige oder einer anderen Art von Computersystem oder einer beliebigen Kombination davon entspricht. Der Computer kann auch einen oder mehrere Datenspeicher enthalten. Der Computer kann so konfiguriert sein, dass er Daten und/oder andere hierin beschriebene Informationen aus/in dem Datenspeicher verwaltet, abruft, erzeugt, verwendet, überarbeitet und speichert. Beispiele für einen Datenspeicher können eine Datei und/oder einen Datensatz umfassen, der in einer Datenbank (z. B. Oracle, Microsoft SQL-Server), einem Dateisystem, einer Festplatte, einer SSD, einem Flash-Laufwerk, einer Speicherkarte und/oder einer anderen Art von Gerät oder System gespeichert ist, das nichtflüchtige Daten speichert. Es ist anzumerken, dass die Offenbarung zwar eine Beschreibung im Zusammenhang mit einem voll funktionsfähigen Computer und/oder einer Reihe von Handlungen enthält, dass aber Fachleute verstehen werden, dass zumindest Teile des Mechanismus der vorliegenden Offenbarung und/oder der beschriebenen Handlungen in Form von ausführbaren Computer-/Prozessoranweisungen (z. B, die beschriebenen Software-Befehle und/oder die entsprechenden Firmware-Befehle), die in einem nicht-transitorischen maschinenverwendbaren, computerverwendbaren oder computerlesbaren Medium in einer beliebigen Form enthalten sind, verteilt werden können, und dass die vorliegende Offenbarung gleichermaßen gilt, unabhängig von der besonderen Art des Befehls- oder Datenträgermediums oder Speichermediums, das zur tatsächlichen Durchführung der Verteilung verwendet wird. Beispiele für nicht-transitorische maschinenlesbare oder computerlesbare Medien sind: ROMs, EPROMs, Magnetbänder, Festplattenlaufwerke, SSDs, Flash-Speicher, CDs, DVDs und Blu-ray-Disks. Die vom Computer/Prozessor ausführbaren Anweisungen können eine Routine, eine Unterroutine, Programme, Anwendungen, Module, Bibliotheken und/oder Ähnliches umfassen. Ferner ist zu beachten, dass die ausführbaren Computer-/Prozessoranweisungen Quellcode, Bytecode, Laufzeitcode, Maschinencode, Assemblersprache, Java, JavaScript, Python, C, C#, C++ oder einer anderen Form von Code entsprechen und/oder daraus erzeugt werden können, der so programmiert/konfiguriert werden kann, dass er mindestens einen Prozessor veranlasst, die hierin beschriebenen Handlungen und Merkmale auszuführen. Weiterhin können die Ergebnisse der beschriebenen/geforderten Prozesse oder Funktionen in einem computerlesbaren Medium gespeichert, auf einer Anzeigevorrichtung angezeigt und/oder ähnlichem werden. Der Klassifikator oder die neuronalen Netze oder neuronalen Netzwerke können in einem Rahmenwerk für maschinelles Lernen implementiert und eingesetzt werden, z. B. TensorFlow-Framework, Microsoft Cognitive Toolkit-Framework Rahmenwerk, Apache Singa Rahmenwerk oder Apache MXNet Rahmenwerk.

## Patentansprüche

1. Computerimplementiertes Verfahren zum Erkennen einer Diebstahlsituation, bei der eine erste Person eine zweite Person beklaut, wobei zeitlich aufeinander folgende Bilder einer Kamera, die eine Bewegung wenigstens eines Arms der ersten Person darstellen, auf ein Vorliegen der Diebstahlsituation überprüft werden, und wobei, wenn die Bewegung des Arms der ersten Person einer Diebstahlsituation entspricht, ein Signal ausgegeben wird.

2. Verfahren nach Anspruch 1, wobei eine Position des Arms der ersten Person mit einer Ortsposition wenigstens eines vorgegebenen Körperpunktes der Person im Bild erfasst wird, wobei wenigstens zwei zeitlich aufeinander folgende Ortspositionen des Körperpunktes von zwei zeitlich aufeinander folgenden Bildern auf das Vorliegen der Diebstahlsituation überprüft werden.

3. Verfahren nach einem der Ansprüche 1 oder 2, wobei die Überprüfung des Vorliegens einer Diebstahlsituation mithilfe eines Klassifikators, insbesondere mithilfe eines trainierten neuronalen Netzes, durchgeführt wird.

4. Verfahren nach Anspruch 3, wobei mithilfe des Klassifikators in einem ersten Schritt anhand der Bilder zeitlich aufeinander folgende Ortspositionen wenigstens eines vorgegebenen Körperpunktes der Person ermittelt werden, und wobei in einem zweiten Schritt anhand der zeitlich aufeinander folgenden Ortspositionen des wenigstens einen vorgegebenen Körperpunktes mithilfe des Klassifikators das Vorliegen der Diebstahlsituation überprüft wird, wobei insbesondere der erste Schritt von einem ersten trainierten neuronalen Netz und der zweite Schritt von einem zweiten trainierten neuronalen Netz durchgeführt wird.

5. Verfahren nach einem der Ansprüche 3 oder 4, wobei der Klassifikator die Diebstahlsituation anhand eines Positionsvektors mit einer Ortsposition für wenigstens einen der folgenden Körperpunkte überprüft: Kopfpunkt im Bereich des Kopfes und/oder erster Handmarkierung im Bereich einer ersten Hand und/oder eine zweite Handmarkierung im Bereich einer zweiten Hand und/oder eine erste Schultermarkierung im Bereich einer ersten Schulter und/oder eine zweite Schultermarkierung im Bereich einer zweiten Schulter und/oder eine erste Ellbogengelenkmarkierung im Bereich eines ersten Ellbogengelenkes und eine zweite Ellbogenmarkierung im Bereich eines zweiten Ellbogengelenkes und/oder eine erste Handgelenkmarkierung im Bereich eines ersten Handgelenkes und/oder eine zweite Handgelenkmarkierung im Bereich eines zweiten Handgelenkes.

6. Verfahren nach einem der Ansprüche 1 bis 5, wobei die Bewegung des wenigstens einen Arm der ersten Person relativ gegenüber einer zweiten Person auf ein Vorliegen der Diebstahlsituation überprüft wird, und wobei, wenn die relative Bewegung des Arms der ersten Person gegenüber der zweiten Person einer Diebstahlsituation entspricht, das Signal ausgegeben wird.

7. Verfahren nach einem der vorhergehenden Ansprüche, wobei eine vorgegebene Anzahl von Bildern, insbesondere zwischen 10 und 40 Bilder, für das Vorliegen einer Diebstahlsituation überprüft werden, wobei die Bilder abhängig von einem Öffnen einer Tür eines öffentlichen Verkehrsmittels und/oder abhängig von einem Schließen der Tür des öffentlichen Verkehrsmittels ausgewählt werden.

8. Verfahren nach einem der vorhergehenden Ansprüche, wobei das trainierte neuronale Netz als neuronales Transformer Netzwerk oder als 3D gefaltetes neuronale Netzwerk oder als LSTM (long short term memory) neuronales Netzwerk ausgebildet ist.

9. Computerimplementiertes Verfahren zum Trainieren eines neuronalen Netzes mit zeitlich aufeinander folgenden Trainingsbildern eines Bewegungsablaufes wenigstens eines Arms einer ersten Person zum Erkennen einer Diebstahlsituation oder zum Erkennen einer Ortsposition wenigstens eines vorgegebenen Körperpunktes der ersten Person, wobei die Trainingsbilder die erste Person wenigstens teilweise von oben zeigen, wobei die erste Person im Bild wenigstens eines der folgenden Merkmale aufweist: eine Kopfmarkierung im Bereich des Kopfes der ersten Person und/oder eine erste Handmarkierung im Bereich einer ersten Hand und/oder eine zweite Handmarkierung im Bereich einer zweiten Hand und/oder eine erste Schultermarkierung im Bereich einer ersten Schulter und/oder eine zweite Schultermarkierung im Bereich einer zweiten Schulter und/oder eine erste Ellbogengelenkmarkierung im Bereich eines ersten Ellbogengelenkes und eine zweite Ellbogenmarkierung im Bereich eines zweiten Ellbogengelenkes und/oder eine erste Handgelenkmarkierung im Bereich eines ersten Handgelenkes und/oder eine zweite Handgelenkmarkierung im Bereich eines zweiten Handgelenkes,
wobei die Trainingsbilder eine Diebstahlsituation darstellen, und wobei die Trainingsbilder als Diebstahlsituation gekennzeichnet sind.

10. Verfahren nach Anspruch 9, wobei die Trainingsbilder wenigstens eine zweite Person wenigstens teilweise von oben zeigen, wobei die zweite Person eine der folgenden Merkmale aufweist: eine erste Schultermarkierung im Bereich einer ersten Schulter und/oder eine zweite Schultermarkierung im Bereich einer zweiten Schulter und/oder eine erste Ellbogengelenkmarkierung im Bereich eines ersten Ellbogengelenkes und eine zweite Ellbogenmarkierung im Bereich eines zweiten Ellbogengelenkes und/oder eine erste Handgelenkmarkierung im Bereich eines ersten Handgelenkes und/oder eine zweite Handgelenkmarkierung im Bereich eines zweiten Handgelenkes aufweist.

11. Verfahren nach einem der Ansprüche 9 oder 10, wobei beim Training des neuronalen Netzes mit den Trainingsbildern eine Ortsposition wenigstens eines Körperpunktes wenigstens einer Person berücksichtigt wird, wobei die Ortsposition des Körperpunktes einen x-Wert auf einer x-Achse und einem y-Wert auf einer y-Achse eines kartesischen Koordinatensystems innerhalb des Bildes aufweist, und wobei die Ortsposition des Körperpunktes für ein überwachtes Training des neuronalen Netzes zum Erkennen der Ortsposition des Körperpunktes verwendet wird.

12. Verfahren nach einem der Ansprüche 9 bis 11, wobei ein erstes neuronales Netz anhand der Trainingsbilder darauf trainiert wird, Ortspositionen wenigstens eines vorgegebenen Körperpunktes der ersten Person in den Trainingsbildern zu ermitteln.

13. Verfahren nach einem der vorhergehenden Ansprüche, wobei ein zweites neuronales Netz anhand zeitlich aufeinander folgender Ortspositionen des wenigstens einen vorgegebenen Körperpunktes einer Person mit einem überwachten Lernverfahren trainiert wird, ein Vorliegen einer Diebstahlsituation zu erkennen.

14. Computer, der ausgebildet ist, ein Verfahren gemäß einem der vorhergehenden Ansprüche auszuführen.

15. Computerprogramm, das Befehle aufweist, die bei einem Ablaufen auf einem Computer ein Verfahren gemäß einem der Ansprüche 1 bis 13 ausführen.
